# EUROPEAN PATENT SPECIFICATION

(11) **EP 2 030 882 B1**
(45) Date of publication and mention of the grant of the patent: **06.01.2010**
(21) Application number: 07017225.9
(22) Date of filing: 03.09.2007
(51) Int. Cl.: B62J 17/02, B62K 19/30

(54) **A cowling assembly for a motorcycle and a motorcycle equiped with such a cowling assembly**
Verkleidungsanordnung für ein Motorrad und mit einer solchen Verkleidungsanordnung ausgestattetes Motorrad
Carénage pour motocyclette et motocyclette équipée d'un tel carénage

(43) Date of publication of application: 04.03.2009
(73) Proprietor: Yamaha Motor Research & Development Europe s.r.l., 20050 Gerno di Lesmo (MI) (IT)
(72) Inventor: Tishiharu, Shigeta, 20148 Milano (IT); Proserpio, Cristiano, 20017 Rho (MI) (IT); Tisci, Riccardo, 20010 Pogliano M.se (MI) (IT)
(74) Representative: Grünecker, Kinkeldey, Stockmair & Schwanhäusser Anwaltssozietät

(56) References cited:
- DE-A1- 10 342 106
- DE-A1-102004 057 132

## Description

The present invention relates to the field of motor cycles. In particular, the present invention relates to a front cowling assembly for a motor cycle and a respective motor cycle equipped with such a cowling assembly. In more detail, the present invention relates to the way such a cowling assembly is mounted to and removed from a motor cycle.

It is well known in the field of motor cycles, that during the design of component parts and/or accessories of motor cycles, attention has to be paid not only to the appearance and look or even shape of said component parts and/or accessories but also to the way same may be mounted to and removed from the motor cycle for which they have been designed. For instance, during the design of side covering elements adapted to be mounted to a motor cycle so as to protect parts of it such as the engine or the like, it has to be taken into particular consideration that said covering elements, once mounted to the motor cycle will influence the overall look and appearance of said motor cycle, as well as its aerodynamic or the like, which will therefore influence the overall performance of the motor cycle in terms of speed and fuel consumption; however, special attention has also to be paid to the way these protecting elements will be mounted to the motor cycle and removed therefrom as the need arises. In fact, if the process or mounting operation would reveal unduly long and/or troublesome, assembly of the overall motor cycle could also reveal to be difficult and/or troublesome, resulting in the assembly operation being unduly elongated, so that the production and manufacturing costs would also unduly increase, accordingly. The same consideration as stated above also applies to the removal and reassembly of said covering elements as soon as the need arises to remove them from the motor cycle, for instance, to gain access to component parts of said motor cycle for the purpose of repairing and/or substituting same. Should it reveal too difficult or troublesome to remove said covering elements from the motor cycle, the maintenance operations to be carried out would also be unduly elongated and troublesome, thus negatively affecting the maintenance cost which would also unduly increase accordingly. Among the accessories or component parts which need to be often, if not even regularly, removed from the motor cycle for inspection and/or maintenance purposes, those accessories and/or equipments usually belonging to the front cowling element of a motor cycle may be cited; these accessories and/or component parts in turn may comprise a front cowling cover, rear mirrors, front headlights and/or direction indicators, the speedometer, the fuel level indicator, the oil pressure indicator, the cooling fluid level indicator and similar equipments. Accordingly, many efforts have been made during the last years by the manufacturers of motor cycles, in an attempt to find adequate and convenient solutions allowing accessories of motor cycles to be easily, quickly and without the need of special tools, mounted to and removed from said motor cycles. In particular, many efforts have been dedicated to the purpose of finding adequate solutions as on how to mount and assemble the component parts and/or accessories usually belonging to the front cowling assembly of a motor cycle.

However, in spite of all the efforts made, finding convenient solutions for easily and quickly mounting and removing as well as for assembling and disassembling accessories usually belonging to the front cowling assembly, did reveal to be a quite difficult task, so that, the solutions proposed in this sense and known in the prior art may not be regarded as satisfactory as required, the reason for that being as follows.

For instance, solutions have been proposed according to which special fixing means, were used for the purpose of fixing predefined accessories or component parts to the motor cycle or a part of it such as, for instance, the front cowling assembly. However, these special fixing means have the disadvantage that they can only be used for a particular motor cycle, so that fixing means had to be designed and provided ad hoc for any particular motor cycle. Moreover, very often, when special fixing means are used, also corresponding special tools have to be provided for the purpose of operating and/or actuating said special fixing means. Among the special fixing means produced, special clips or the like may be cited, along with corresponding special tools adapted to allow said special clips to be operated. Other disadvantages affecting the solutions proposed in the past and known in the prior art relate to the fact that although each component part or accessory could be, in principle, mounted to and removed from the front cowling assembly, for instance using the special fixing means and the corresponding special tools cited above, the mounting and assembly operations did reveal nevertheless to be troublesome, due to the fact that said component parts and/or accessories have to be mounted to and removed from the cowling assembly singularly. However, since very often a large number of accessories or component parts or even equipments belongs to the cowling assembly , removing one of them from the cowling assembly for maintenance and/or reparation purposes is often rendered troublesome due to the reduced space at the disposal of the operator. Still another disadvantage affecting the prior art solutions relates to the fact that the operator, for the purpose of removing component parts or accessories or even equipments from the cowling assembly is requested to stay beside the motor cycle; the same then furthermore applies when the component parts, accessories, or equipments have to be mounted again to the cowling assembly.

Further examples of cowling assemblies for motorcycles can be found in each of documents DE 103 42 106 A1 and DE 10 2004 057 132 A1

Accordingly, in view of the above, it is an object of the present invention to provide a solution allowing to overcome the problems as stated above. In particular, it is an object of the present invention to provide a convenient solution allowing accessories, component parts or even equipments of a motor cycle to be quickly and easily assembled and mounted to said motor cycle, as well as to be quickly removed from said motor cycle. Still in more detail, it is an object of the present invention to provide a convenient solution allowing the component parts, accessories or even equipments belonging usually to the cowling assembly of a motor cycle to be quickly assembled, mounted, as well as disassembled and removed, for instance, when the need arises to repair or even substitute one or more of these component parts, accessories and/or equipments.

In general terms, the present invention is based on the consideration that the problems affecting the prior art solutions, in particular, the prior art cowling assemblies may be overcome if the cowling assembly, as a whole, can be mounted to and removed from the motor cycle. In fact, if this solution is adopted, the overall cowling assembly may be assembled and/or finished first, and then subsequently mounted as a whole to the motor cycle. In this way, the possibility is offered to the operator to mount each of the accessories belonging to the cowling assembly singularly and in convenient conditions to the cowling assembly, so that this cowling assembly, along with the accessories mounted thereto, can be subsequently mounted to the motor cycle as a single piece or part. Moreover, when the need arises to repair or even to substitute one of the accessories or equipments belonging to the cowling assembly, said cowling assembly may be first removed from the motor cycle as a whole, thus allowing the operator to work on one or more of the accessories or equipments of the motor cycle in easy and convenient conditions. Still a further consideration on which the present invention is made relates to the fact that the problems affecting the prior art solutions, in particular, the prior art cowling assemblies, can be overcome or at least, drastically reduced or minimized by providing a cowling assembly comprising a support element with fixing means adapted to allow said support element and the overall cowling assembly to be quickly mounted to and removed from the motor cycle. Another consideration on which the present invention is made relates to the fact that the operation for mounting and/or removing the cowling assembly may be further accelerated or speeded-up if the fixing means of the support element are located in a position easily accessible by an operator.

On the basis of the considerations as stated above, the above objectives are solved by the features of independent claims 1 and 13.

Further preferred embodiments of the present invention are laid down in the dependent claims.

Further advantages, objects and features as well as embodiments of the present invention are defined in the appended claims and will become more apparent from the following detailed description when taken with reference to the accompanying drawings, in which identical corresponding parts are identified by the same reference numerals. In particular, in the drawings:
Fig. 1a relates to a schematic side view of a motor cycle equipped with a front cowling assembly according to the present invention;
Fig. 1b relates to a schematic side view of a motor cycle and a front cowling assembly according to the present invention;
Fig. 2a relates to a schematic side view in partial cross-section of a cowling assembly according to a first embodiment of the present invention;
Fig. 2b relates to a schematic side view of the cowling cover and the support element of the front cowling assembly according to the present invention;
Fig. 3a relates to a cross-sectional view of further details of the support element of the front cowling assembly according to the present invention;
Fig. 3b relates to a schematic side view of a fixing solution allowing a support element of a cowling assembly according to a further embodiment of the present invention to be mounted to and removed from a motor cycle or a frame thereof;
Fig. 4a relates to a schematic front view of the support element of the front cowling assembly according to the present invention;
Fig. 4b relates to a schematic enlarged rear view of the support element of the front cowling assembly according to the present invention.

While the present invention is described with reference to the embodiments as illustrated in the following detailed description as well as in the drawings, it should be understood that the following detailed description as well as the drawings are not intended to limit the scope of the present invention to the particular illustrative embodiments disclosed, but rather, the described illustrative embodiments merely exemplify the various aspects and features of the present invention, the scope of which is defined by the appended claims.

The present invention is understood to be of particular advantage when applied to two-wheeled motor cycles, such as, for instance, motor bikes. For this reason, examples will be given in the following, in which corresponding embodiments of the front cowling assembly according to the present invention are applied to motor bikes. However, it has to be appreciated that the applications of the front cowling assembly according to the present invention are not limited to the case of motor bikes. On the contrary, the front cowling assembly according to the present invention may also be applied to other motor cycles and/or motor vehicles, in particular, to three or even four-wheeled motor cycles such as for instance, choppers, quads or the like.

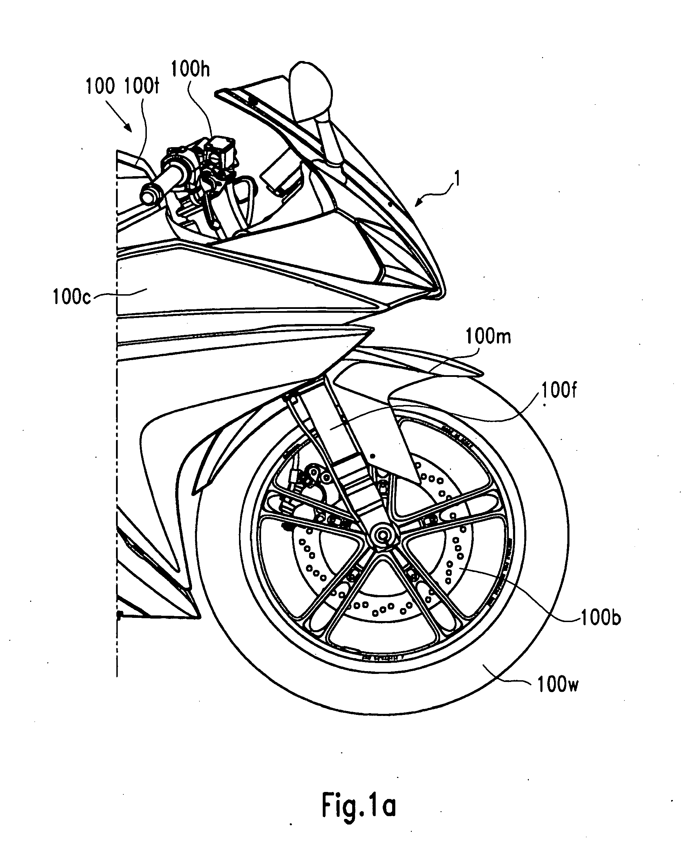

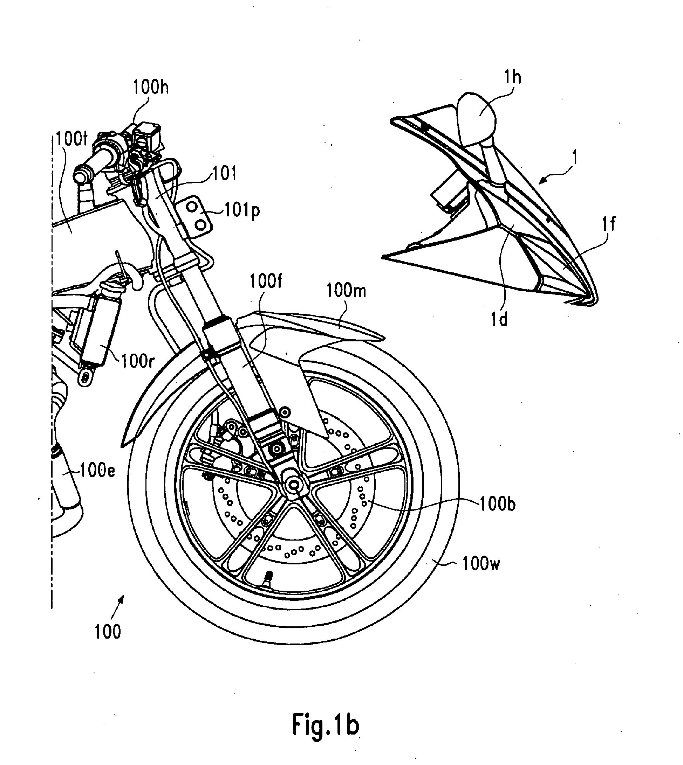

In the following, some details and features of the front cowling assembly according to the present invention will be described with reference to Figs. 1a and 1b.

In Fig. 1a, the front portion of a motor cycle 100 is depicted. Although in Fig. 1a essentially the front portion of a motor cycle has been depicted whilst some portions or component parts or even accessories or equipments common to usual motor cycles have been omitted in Fig. 1 for the sake of clarity, the essential features of common motor cycles may be recognized when looking at Fig. 1a. These features relate in particular, to a front wheel 100w, with said front wheel 100w comprising a brake disk 100b and being supported by a front fork 100f; said front fork 100f supports moreover a front fender 100m provided to avoid the driver and/or passenger or even the motor cycle 100 from being splashed with mud or water lying on the bottom or the like. Side covering elements 100c are mounted to the motor cycle 100 on opposite sides thereof; components of the motor cycle 100 such as, for instance, the engine, the crankcase, the cylinder or the like have therefore to be understood as being located in the area defined by said side covering elements 100c, in combination, and therefore, as being located behind the right-side cover element 100c depicted in Fig. 1. The motor cycle 100 further comprises a fuel tank 100t (partially covered by the side covering element 100c), along with a handlebar 100h provided with brake handles and corresponding cables extending therefrom. A front cowling assembly 1 is mounted to the motor cycle 100, with said front cowling assembly 1, supporting and/or comprising as depicted in Fig. 1b, equipments and/or accessories such as rear mirrors 1h, headlights 1f and front direction indicators 1d. With reference now to Fig. 1b, where for the sake of clarity and convenience, the side covering elements 100c of Fig. 1a have been omitted, it can be appreciated that the motor cycle 100 comprises, in the area defined by said side covering elements 100c, a radiator 100r and an exhaust gas purifying pipe 100e. It can be furthermore appreciated from Fig. 1b that the front fork 100f supporting the front wheel 100w and the front fender 100m extends from a steering tube 101 which is in turn fixed and/or connected to the main frame (not depicted in the drawings) of the motor cycle 100. It appears moreover from Fig. 1b that a fixing element 101p extends from the steering tube 101; as it will be better appreciated by means of the following disclosure, said fixing element 101p belongs to fixing means adapted to allow the front cowling assembly 1 to be mounted to the motor cycle 100 as depicted in Fig. 1a.

As anticipated above, some usual component parts and/or features or even equipments and/or accessories of common motor cycles have not been depicted in Figs. 1a and 1b for the sake of clarity; the features not depicted may relate, for instance, to a seat, a rear wheel, details of the engine and/or crankcase or even the cylinder, rear direction indicators or the like. Even if not strictly essential to the present invention, these omitted features and/or their equivalents have to be considered as being comprised in the motor cycle as depicted in Fig. 1a and 1b.

Moreover, the same considerations also apply to the front cowling assembly 1 depicted in Figs. 1a and 1b; in fact, even if essentially only the rear mirrors 1h, the headlights 1f and the front direction indicators 1b have been explicitly identified in Fig. 1b as belonging or being supported by the front cowling assembly 1, it has to be appreciated that said front cowling assembly 1 is adapted to support other equipments in addition to those clearly depicted and identified in Fig. 1b. This additional equipments may comprise, for instance, a speedometer, a fuel level indicator, an oil pressure indicator, a cooling fluid level indicator and/or even further equipments usually needed by the driver to check and/or manage the functioning of the motor cycle 100.

Whilst further details and/or features of the front cowling assembly 1 according to the present invention will be comprehensively described in the following, it can be appreciated at present, when looking at Figs. 1a and 1b, in combination, that the basic idea of the present invention relates to the fact that the front cowling assembly 1 depicted therein may be mounted to and removed from the motor cycle 100 as a whole. That means, that for instance removing the front cowling assembly 1 from the motor cycle 100, results in all those accessories or equipments supported by said front cowling assembly 1 being also removed from the motor cycle 100 with a unique operation. The same applies when the front cowling assembly 1 has to be mounted to the motor cycle 100; mounting said front cowling assembly 1 to the motor cycle as depicted in Fig. 1 a results in all the equipments and/accessories supported by said front cowling assembly 1 (and previously mounted thereto) being mounted simultaneously (with a unique operation) to the motor cycle 100. As stated above, said accessories and/or equipments supported by or belonging to the front cowling assembly 1 may comprise the rear mirrors 1h, the headlights 1f and the front direction indicators 1d identified in Fig. 1b, along with other accessories and/or equipments, such as a speedometer and/or similar control equipments. Accordingly, when for instance, the need arises to repair or even substitute one of said equipment, let's say the fuel level indicator, the operator is not requested to stay beside the motor cycle and to work in difficult conditions; on the contrary, the possibility is given to the operator, to entirely remove the front cowling assembly 1 from the motor cycle, to put it for instance on a working table so as to be allowed to repair or substitute said fuel level indicator in convenient conditions, for instance, even sitting. Accordingly, the operator may turn or move the front cowling assembly 1 so as to dispose it in the most convenient position offering easy access to said fuel level indicator. The operations may therefore be accelerated and/or speeded up, with evident corresponding advantages in terms of reduced and/or contained costs. Furthermore, for those equipments and accessories of the front cowling assembly 1, which are supplied with electrical current, the operator is even not requested to electrically disconnect the equipments to be repaired singularly, but as it will become more apparent with the following disclosure, all the equipments of the front cowling assembly 1 may be automatically and simultaneously disconnected when said front cowling assembly 1 is removed from the motor cycle 100; this also allows to speed up the operations and furthermore to avoid any risk. However, when, on the contrary, there is no need to electrically disconnect the equipments of the cowling assembly, said cowling assembly may be removed from the motorcycle without disconnecting and/or interrupting the electrical cables by means of which said equipments are supplied with electrical current.

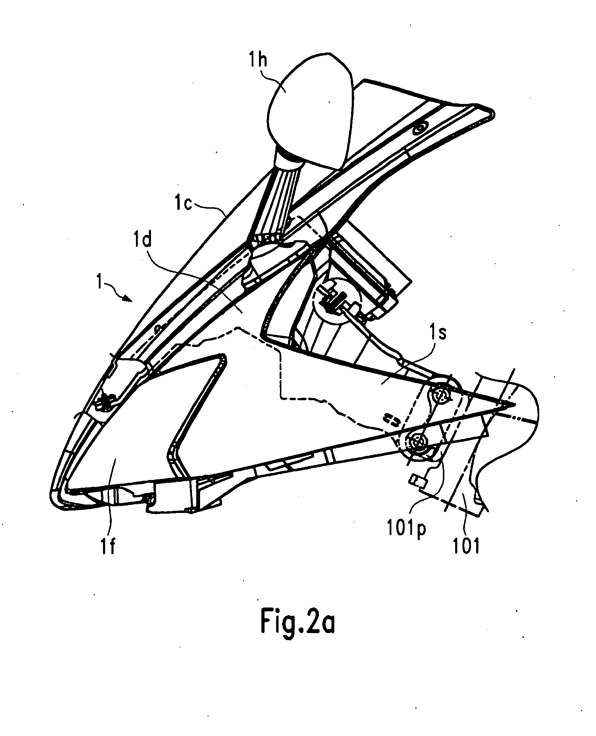

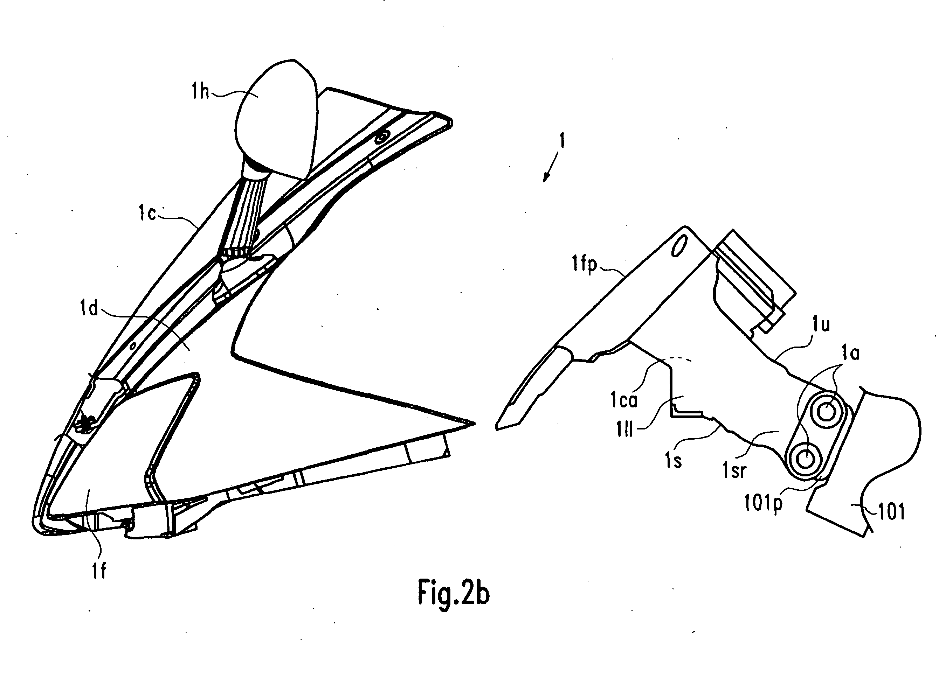

In the following, with reference to Figs. 2a and 2b, some additional features and/or details of the front cowling assembly according to the present invention will be disclosed; in Figs. 2a and 2b, those features which have already been described with reference to Figs. 1a and 1b are identified by the same reference numerals.

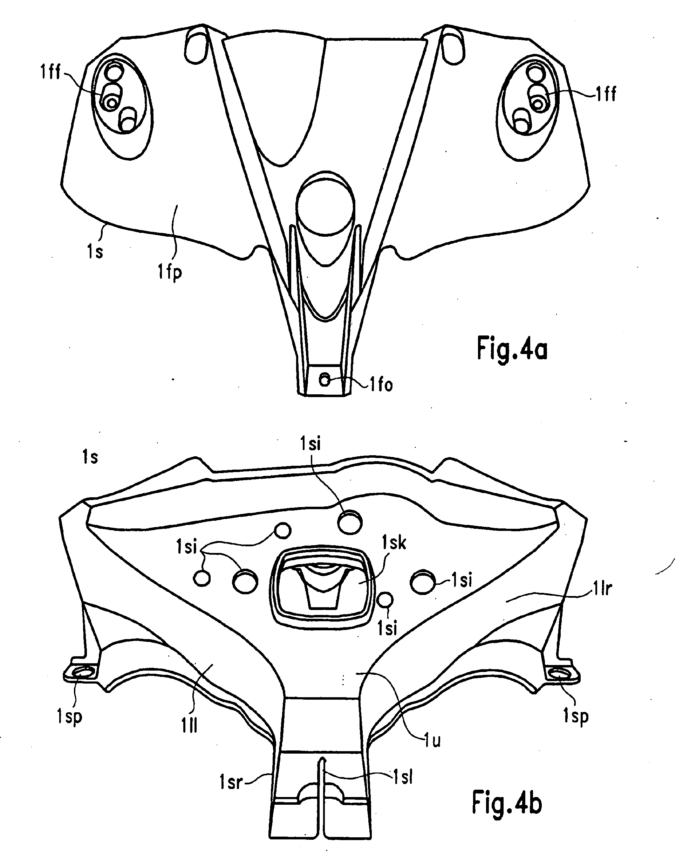

As apparent from Fig. 2b, the front cowling assembly 1 according to the present invention comprises a support element 1s and a front cowling cover 1c; moreover, as apparent from Fig. 2a, said front cowling cover is adapted to be supported by said support element 1s. In particular, to this end, fixing means may be provided, such as, for instance, clips, screws, bolts or the like. According to the particular embodiment of the present invention depicted in Figs. 2a and 2b, the rear mirrors 1h, the headlights 1f and the front direction indicators 1d are mounted directly to the front cowling cover 1c. However, according to the exigencies and circumstances, other solutions are possible, according to which, for instance, said accessories are mounted to the support element 1s. In this case, the front cowling cover 1c will comprise corresponding apertures adapted to receive said accessories. The support element 1s (the shape and layout of which will be more comprehensively described in the following) comprises a front end portion or surface 1fp adapted to match with the front cowling cover 1c, along with a rear end portion 1sr. Moreover, the support element 1s comprises a top or upper surface 1u, from which two opposite side walls 1ll and 1lr (see also, Fig. 4b) extends downward so as to define a recess or cavity 1ca below said upper or top surface 1u. As apparent from Fig. 2b, fixing means 1a are provided, with said fixing means 1a allowing the support element 1s to be connected or fixed through its rear end portion 1sr to the main frame of the motor cycle, in particular, to the plate 101p extending from the steering tube 1001. It can be therefore appreciated, when looking at Figs. 2a and 2b, that once the front cowling assembly 1 has been assembled as depicted in Fig. 2a, i.e. with the front cowling cover 1c fixed to the support element 1s, the front cowling assembly 1 may be mounted and removed as a whole, to and from the motor cycle 100, respectively by simply detaching from and fixing to, respectively the support element 1s of said front cowling assembly 1; these may, in particular, be obtained by acting on the fixing means 1a which co-operate with the protruding plate 101p extending from the steering tube 101. A simple, unique operation is therefore requested for removing from and/or mounting to the motor cycle 100, all the equipments supported by or belonging to the front cowling assembly 1, simultaneously. The position at which the fixing means 1a are located allows easy access to said fixing means 1a, so that mounting and/removing the whole front cowling assembly 1 results in being strongly simplified, thus resulting in the corresponding operations being accelerated and the resulting costs being reduced.

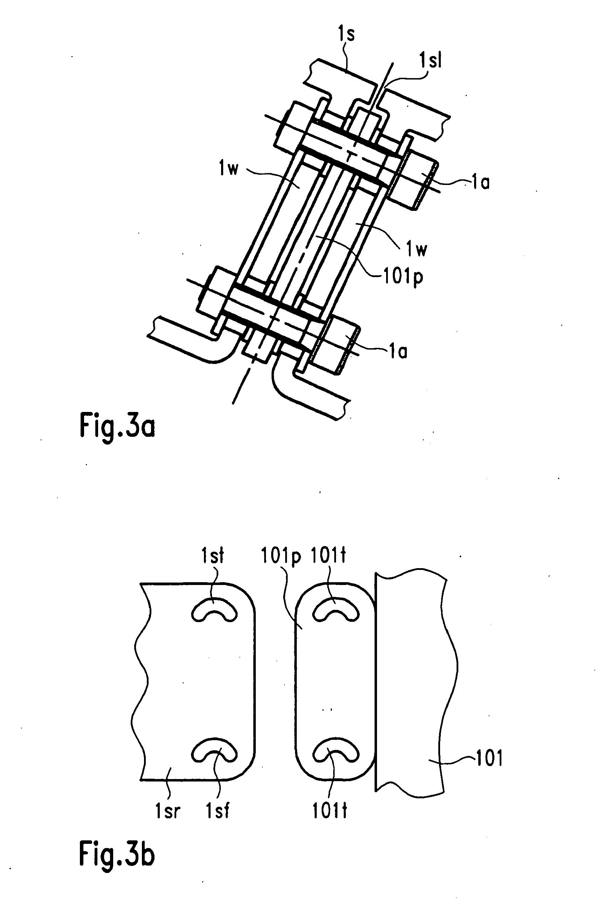

In the following, with reference to Figs. 3a and 3b, further details and/or features of the front cowling assembly according to the present invention will be further described; again those features which have been described above with reference to previous figures are identified in Figs. 3a and 3b by the same reference numerals.

In Fig. 3a, the way the support element 1s is fixed to the frame of the motor cycle is depicted. In particular, as apparent from Fig. 3a (see also Fig. 4b), the support element 1s comprises, in its rear end portion 1sr, a slot 1sl adapted to receive the protruding plate 101p. During mounting of the front cowling assembly 1 to the motor cycle, it is therefore requested first to act on the support element 1s so as to allow the protruding plate 101p to enter into the slot 100sl so as to be received inside said slot 100sl. Subsequently, the fixing means 1a are introduced into corresponding through holes provided in the opposite walls 1w defining the slot 1sl, with said fixing means being equally received into corresponding through holes provided in the protruding plate 101p. According to the exigencies and/or circumstances, said fixing means 1a may comprise screws, bolts or the like. Screwing the fixing means 1a results in the walls 1w to be forced to come into abutment with the protruding plate 101p so that the support element 1s is stably and reliably fixed to the protruding plate 101p due to the resulting friction.

According to the alternative embodiment depicted in Fig. 3b both the through holes 1st provided in the rear end portion 1sr of the support element 1s and the corresponding through holes 101t provided in the protruding plate 101p of the steering tube 101 have an elongated curved shape. Even if said through holes 1st and 101t are adapted, like the circular through holes of the embodiment depicted in Fig. 3a to receive the screwing means 1a, said through holes 1st and 101t of the embodiment depicted in Fig. 3b allows to regulate the position of the support element 1s with respect to the protruding plate 101p and accordingly, with respect to the steering tube 101 and the overall main frame of the motor cycle. In particular, the most convenient inclination of the support element 1s and accordingly, of the whole front cowling assembly 1 with respect to the motor cycle may be selected by introducing the screwing means 1a into said through holes 1st and 101t, orienting the support element 1s until the desired position is reached and screwing the screwing means 1a so as to firmly fix the support element 1s to the protruding plate 101p in the desired position.

Further details and/or features of the front cowling assembly according to the present invention will be described in the following with reference to Figs. 4a and 4b, wherein, as usual, features depicted therein and already described with reference to previous figures are identified by the same reference numerals.

As apparent from Fig. 4a, the support element 1s comprises, in its front end portion 1fp fixing means 1f adapted to allow the left and right rear mirrors to be fixed to said support element 1s. The front cowling cover 1c will therefore comprise two corresponding apertures adapted to receive the fixing means 1ff and the corresponding bottom end portion of said left and right rear mirrors. However, as stated above and according to the exigencies and circumstances, the fixing means 1ff may be provided on said front cowling cover 1c so as to allow the left and right rear mirrors to be fixed directly to said front cowling cover 1c. Further through holes 1fo are provided in the front end portion 1fp of the support element 1s for the purpose of allowing the front cowling cover 1c to be fixed to said support element 1s.

The shape and configuration of the support element 1s of the front cowling assembly according to the present invention may be well appreciated when looking at Fig. 4b; it appears in fact, clearly, from Fig. 4b that said support element comprises a top or upper wall 1u from which side walls 1ll and 1lr extends on opposite sides thereof. Said side walls 1ll and 1lr come close to each other in proximity of the rear end portion 1sr of the support element 1s. It is in said rear end portion 1sr that there is provided the slot 1sl adapted to receive the protruding plate 101p extending from the steering tube 101 of the motor cycle (see also Fig. 3a). According to the particular embodiment depicted in Fig. 4b, the slot 1sl is open at the bottom and closed at the top; this solution allows during mounting to the motorcycle of the cowling assembly 1 according to the present invention to be set on the protruding plate 101p so as to rest on said protruding plate 101p. This allows the assembly and/or mounting operation to be further simplified since the operator is allowed to use both hands for acting on the screwing means 1a without any need to use one hand for holding the front cowling assembly 1.

The side walls 1ll and 1lr extend so as to come away from each other in proximity of the front end portion 1fb by means of which said side walls 1ll and 1lr are connected. Moreover, as apparent from Fig. 4b, a plurality of receiving seats or apertures 1si are provided; said receiving seats, recesses, cavities or even through apertures 1si are provided for allowing a corresponding plurality of equipments to be mounted to the support element 1s. As anticipated above, said plurality of equipments may comprise a fuel level indicator, an oil pressure indicator, control lights or the like. A further main receiving seat, recess or aperture 1sk is formed in the top wall 1u of the support element 1s. These receiving seat or aperture is adapted to allow the speedometer of the motor cycle to be mounted to said support element 1s. The electrical cables and harness provided to supply electrical current to the plurality of equipments mounted to the upper wall 1u of the support element 1s will therefore extend from said equipments into the recess 1ca (see also, Fig. 2b) defined by the upper wall 1u, in combination with the side walls 1ll, 1lr and the front end portion 1fp. A convenient receiving place for arranging said cables is therefore, provided. Moreover, according to the circumstances, the electrical cables may be connected to one or more sockets or plugs also received in the cavity or recess 1ca. Corresponding plugs or sockets may therefore also be provided on the motor cycle, so that said cable may be disconnected by simply acting on said plugs or sockets. If only one socket or plug is provided to which all the electrical cables are connected and a unique corresponding socket or plug is provided on the side of the motor cycle, all said electrical cables may be connected or disconnected from a source of electrical power of the motor cycle (for instance, the battery) by simply connecting and/or disconnecting the unique socket and/or plug received for instance in the recess 1ca to and from a corresponding unique plug and/or socket provided on the motor cycle.

It has therefore been demonstrated with the disclosure given above, that the present invention allows to overcome or at least to strongly reduce or minimize the drawbacks affecting the prior art front cowling assemblies. In particular, it has been demonstrated with the above disclosure that the front cowling assembly according to the present invention allows easy and quick mounting to and removing from the motor cycle, with corresponding evident advantages in terms of easy maintenance and corresponding reduced costs. It has, in fact, been demonstrated that for instance, when the need arises to repair or substitute one or more of the equipments supported by the front cowling assembly, the operator is not requested to work in inconvenient conditions (staying beside the motor cycle) but is allowed to remove, as a whole, the front cowling assembly according to the present invention from the motor cycle and then to proceed with the repair operation, once the front cowling assembly has been brought to a convenient location and brought into a convenient position so as to allow the operator to work in convenient conditions (for instance, sitting). It has furthermore been demonstrated that, since the front cowling assembly is fixed to the motor cycle by means of a support element, it is only requested, for the purpose of mounting and/or removing said front cowling assembly to and from the motor cycle, respectively, to fix or detach said support element to and from said motor cycle, respectively. Moreover, since said support element is fixed to a protruding plate extending from the steering wheel of the motor cycle, easy access is allowed to the fixing means of the cowling assembly according to the present invention adapted to co-operate with said protruding plate, so that mounting and removing the front cowling assembly to and from the motor cycle reveals to be a very easy and quick duty or task. Finally, due to the particular fixing means implemented in the front cowling assembly according to the present invention, it is also possible to easily and quickly select a convenient orientation and/or inclination of the whole front cowling assembly with respect to the motor cycle. Last, but not least, a convenient storing place is provided for arranging the cables provided for supplying electrical current to the equipments supported by or belonging to the front cowling assembly, a quick and easy way being also offered for the purpose of connecting and/or disconnecting said electrical cables to the source of electrical power of the motor cycle, for instance, the battery.

While the present invention has been described with reference to the particular embodiments depicted in the drawings, it has to be understood that the present invention is not limited to the particular embodiments described but rather, that various elements and modifications may be introduced into the embodiments described without departing from the scope of the present invention, which is defined by the appended claims.

For instance, it will appear clear to those skilled in the art that the rear end portion of the support element of the front cowling assembly according to the present invention may be provided with a slot extending in a direction substantially horizontal, with said slot therefore being adapted to receive a corresponding protruding plate extending from the steering tube of the motor cycle in a direction substantially horizontal.

## Claims

1. A front cowling assembly (1) for a motorcycle (100) comprising a main frame, said assembly (1) comprising a support element (1s) supporting at least a front cowling cover (1c) and adapted to support at least a speed meter said support element (1s) being adapted to be fixed to and detached from said frame of said motorcycle (100) in such a way that fixing said support element (1s) to and detaching said support element (1s) from said frame results in said assembly (1) being fixed to and detached from said frame, respectively;
said support element (1s) comprising a front portion (1fp) facing contrary to a driver or passenger of said motorcycle (100) and a rear portion (1sr) opposite to said front portion (1fp) and facing toward a driver or passenger of said motorcycle (100) once said support element (1s) has been fixed to said frame, with said rear portion (1sr) of said support element (1s) being adapted to be fixed to and removed from said frame of said motorcycle (100);
**characterized in that**
said support element (1 s) comprises a top wall (1 u) adapted to support at least said speed meter and extending between said front portion (1fp) and said rear portion (1 sr), along with two opposite side walls (111, 11r) extending downwardly from said top wall (1u) and coming close to each other in proximity of said rear portion (1sr), **in that** in said rear portion (1sr) there is provided a slot (1sl), and **in that** said slot (1sl) is adapted to receive at least a portion of a plate (101p) extending from the steering tube (101) of said main frame of said motorcycle.

2. An assembly as claimed in claim 1;
**characterized in that:**
Said two opposite walls (1ll, 1lr) comprise through holes (1st) adapted to receive fixing means (1a) for fixing said support element (1s) to said plate (101p) extending form said steering tube (101).

3. An assembly as claimed in claim 2;
**characterized in that:**
Said through holes (1 st) are of the kind adapted to receive screwing means (1a).

4. An assembly as claimed in claim 3;
**characterized in that:**
Said screwing means (1a) are adapted to be received into corresponding holes (101t) of said plate (101p) extending from said steering tube (101).

5. An assembly as claimed in one of claims 1 to 4;
**characterized in that:**
Said slot (1sl) is defined by said two opposite side walls (1ll, 1lr) and extends in a direction substantially vertical so as to be adapted to receive at least a portion of said protruding plate (101p), with said protruding plate (101 p) extending substantially parallel to said steering tube (101).

6. An assembly as claimed in one of claims 1 to 4;
**characterized in that:**
Said slot (1sl) extends in a direction substantially horizontal so as to be adapted to receive at least a portion of said protruding plate (101 p), with said protruding plate (101 p) extending substantially perpendicularly to said steering tube (101).

7. An assembly as claimed in one of claims 1 to 6;
**characterized in that:**
Said support element (1s) further comprises a receiving recess (1ca) adapted to at least partially receive or accommodate the electrical harness or cables adapted to electrically connect said at least one speed meter to an electrical power source of said motorcycle (100).

8. An assembly as claimed in claim 7;
**characterized in that:**
Said recess (1ca) is defined by said two opposite side walls (1ll, 1lr) extending downwardly from said top wall (1 u) of said support element (1 s).

9. An assembly as claimed in claim 8;
**characterized in that:**
Said recess (1 ca) is located below said top wall (1 u) and between said front portion (1fp) and said rear portion (1sr) of said support element (1s) comprising said slot (1sl).

10. An assembly as claimed in one of claims 1 to 9;
**characterized in that:**
Said cowling cover (1c) is mounted on said front portion (1fp) of said support element (1s).

11. An assembly as claimed in one of claims 1 to 10;
**characterized in that:**
Said assembly further comprises at least one rear view mirror (1 h), and **in that** said at least one rear view mirror (1h) is mounted on said cowling cover (1c).

12. An assembly as claimed in one of claims 1 to 11;
**characterized in that:**
Said assembly further comprises at least one head light (1f), and **in that** said at least one head light (1f) is mounted on said cowling cover (1c).

13. A support element (1s) for a motorcycle (100) comprising a main frame, said support element (1s) being adapted to support at least one front cowling cover (1c) and one speed meter of said motorcycle said support element (1s) being adapted to be fixed to and detached from said frame of said motorcycle (100), in such a way that fixing said support element (1s) to and detaching said support element (1s) from said frame results in said at least one cowling cover (1c) and speed meter being fixed to and detached from said frame, respectively, together with said support element (1s) as an assembly;
said support element (1s) comprising a front portion (1fp) facing contrary a driver or passenger of said motorcycle (100) and a rear portion (1sr) opposite to said front portion (1fp) and facing toward a driver or passenger of said motorcycle (100) once said support element (1s) has been fixed to said frame, with said rear portion (1sr) of said support element (1s) being adapted to be fixed to and removed from said frame of said motorcycle;
**characterized in that**
said support element comprises a top wall (1 u) adapted to support said at least one speed meter and extending between said front portion (1fp) and said rear portion (1sr), along with two opposite side walls (1ll, 1lr) extending downwardly from side top wall (1lu) and coming close to each other in proximity of said rear portion (1sr) **in that** in said rear portion (1sr) there is provided a slot (1sl), and **in that**
said slot (1sl) is adapted to receive at least a portion of a plate (101p) extending from the steering tube (101) of said main frame of said motorcycle.

14. A support element as claimed in claim 13;
**characterized in that:**
Said two opposite walls (1ll, 1lr) comprise through holes (1st) adapted to receive fixing means (1 a) for fixing said support element (1 s) to said plate (101p) extending from said steering tube (101).

15. A support element as claimed in claim 14;
**characterized in that:**
Said through holes (1 st) are of the kind adapted to receive screwing means (1a).

16. A support element as claimed in claim 15;
**characterized in that:**
Said screwing means (1a) are adapted to be received into corresponding holes (101t) of said plate (101p) extending from said steering tube (101).

17. A support element as claimed in one of claims 13 to16;
**characterized in that:**
Said slot (1sl) is defined by said two opposite side walls (1ll, 1lr) and extends in a direction substantially vertical so as to be adapted to receive at least a portion of said protruding plate (101p), with said protruding plate (101p) extending substantially parallel to said steering tube (101).

18. A support element as claimed in one of claims 1 to 16;
**characterized in that:**
Said slot (1sl) extends in a direction substantially horizontal so as to be adapted to receive at least a portion of said protruding plate (101p), with said protruding plate (101p) extending substantially perpendicularly to said steering tube (101).

19. A support element as claimed in one of claims 13 to 18;
**characterized in that:**
Said support element (1s) further comprises a receiving recess (1cs) adapted to at least partially receive or accommodate the electrical harness or cable adapted to electrically connect said at least one speed meter to an electrical power source of said motorcycle (100).

20. A support element as claimed in claim 19;
**characterized in that:**
Said recess (1ca) is defined by said two opposite side walls (1ll, 1lr) extending downwardly from said top wall (1u) of said support element (1s).

21. A support element as claimed in claim 20;
**characterized in that:**
Said recess (1ca) is located below said top wall (1u) and between said front portion (1fp) and said rear portion (1sr) of said support element (1s) comprising said slot (1sl).

22. A support element as claimed in one of claims 13 to 21;
**characterized in that:**
It is said front portion (1fp) of said support element (1s) which is adapted to support said cowling cover (1c).

## Patentansprüche

1. Frontverkleidungsanordnung (1) für ein Motorrad (100), das einen Hauptrahmen umfasst, wobei die Anordnung (1) ein Trageelement (1s) umfasst, das wenigstens eine Frontverkleidungsabdeckung (1c) trägt und so eingerichtet ist, dass es wenigstens einen Tachometer trägt, wobei das Trageelement (1s) so eingerichtet ist, dass es an dem Rahmen des Motorrades (100) so angebracht und von ihm abgenommen werden kann, dass Befestigen des Trageelementes (1s) an dem Rahmen und Abnehmen des Trageelementes (1s) von ihm bewirkt, dass die Anordnung an dem Rahmen befestigt bzw. von ihm abgenommen wird;
das Trageelement (1 s) einen vorderen Abschnitt (1fp), der von einem Fahrer bzw. Sozius des Motorrades (100) weggewandt ist, sowie einen hinteren Abschnitt (1 sr) umfasst, der dem vorderen Abschnitt (1fp) gegenüberliegt und einem Fahrer oder Sozius des Motorrades (100) zugewandt ist, wenn das Trageelement (1s) an dem Rahmen befestigt worden ist, wobei der hintere Abschnitt (1sr) des Trageelementes (1 s) so eingerichtet ist, dass er an dem Rahmen des Motorrades (100) befestigt und von ihm entfernt wird;
**dadurch gekennzeichnet, dass**
das Trageelement (1 s) eine obere Wand (1 u) umfasst, die so eingerichtet ist, dass sie wenigstens den Tachometer trägt, und die sich zwischen dem vorderen Abschnitt (1fp) und dem hinteren Abschnitt (1sr) zusammen mit zwei einander gegenüberliegenden Seitenwänden (1ll, 1lr) erstreckt, die sich von der oberen Wand (1 u) nach unten erstrecken und einander in der Nähe des hinteren Abschnitts (1sr) nahekommen, **dadurch**, dass in dem hinteren Abschnitt (1sr) ein Schlitz (1sl) vorhanden ist, und **dadurch**, dass der Schlitz (1sl) so eingerichtet ist, dass er wenigstens einen Abschnitt einer Platte (101p) aufnimmt, die sich von dem Lenkrohr (101) des Hauptrahmens des Motorrades aus erstreckt.

2. Anordnung nach Anspruch 1;
**dadurch gekennzeichnet, dass:**
die zwei einander gegenüberliegenden Wände (111, 1lr) Durchgangslöcher (1st) umfassen, die so eingerichtet sind, dass sie eine Befestigungseinrichtung (1a) zum Befestigen des Trageelementes (1s) an der Platte (101p) umfassen, die sich von dem Lenkrohr (101) aus erstreckt.

3. Anordnung nach Anspruch 2;
**dadurch gekennzeichnet, dass:**
die Durchgangslöcher (1st) von dem Typ sind, der zum Aufnehmen von Schraubeinrichtungen (1a) eingerichtet ist.

4. Anordnung nach Anspruch 3;
**dadurch gekennzeichnet, dass:**
die Schraubeinrichtungen (1 a) so eingerichtet sind, dass sie in entsprechenden Löchern (101t) der Platte (101 p) aufgenommen werden, die sich von dem Lenkrohr (101) aus erstreckt.

5. Anordnung nach einem der Ansprüche 1 bis 4;
**dadurch gekennzeichnet, dass:**
der Schlitz (1sl) durch die zwei einander gegenüberliegenden Seitenwände (111, 1lr) gebildet wird und in einer im Wesentlichen vertikalen Richtung verläuft, so dass er so eingerichtet ist, dass er wenigstens einen Abschnitt der vorstehenden Platte (101 p) aufnimmt, wobei sich die vorstehende Platte (101 p) im Wesentlichen parallel zu dem Lenkrohr (101) erstreckt.

6. Anordnung nach einem der Ansprüche 1 bis 4;
**dadurch gekennzeichnet, dass:**
der Schlitz (1sl) in einer im Wesentlichen horizontalen Richtung verläuft, so dass er so eingerichtet ist, dass er wenigstens einen Abschnitt der vorstehenden Platte (101 p) aufnimmt, wobei sich die vorstehende Platte (101p) im Wesentlichen senkrecht zu dem Lenkrohr (101) erstreckt.

7. Anordnung nach einem der Ansprüche 1 bis 6;
**dadurch gekennzeichnet, dass:**
das Trageelement (1s) des Weiteren eine Aufnahmevertiefung (1 ca) umfasst, die so eingerichtet ist, dass sie wenigstens teilweise den elektrischen Kabelbaum oder Kabel aufnimmt oder unterbringt, die so eingerichtet sind, dass sie den wenigstens einen Tachometer mit einer Stromquelle des Motorrades (100) verbinden.

8. Anordnung nach Anspruch 7;
**dadurch gekennzeichnet, dass:**
die Vertiefung (1ca) durch die zwei einander gegenüberliegenden Seitenwände (111, 1lr) gebildet wird, die sich von der oberen Wand (1 u) des Trageelementes (1 s) nach unten erstrecken.

9. Anordnung nach Anspruch 8;
**dadurch gekennzeichnet, dass:**
sich die Vertiefung (1 ca) unterhalb der oberen Wand (1 u) und zwischen dem vorderen Abschnitt (1fp) und dem hinteren Abschnitt (1sr) des Trageelementes (1s) befindet, der den Schlitz (1sl) umfasst.

10. Anordnung nach einem der Ansprüche 1 bis 9;
**dadurch gekennzeichnet, dass:**
die Verkleidungsabdeckung (1c) an dem vorderen Abschnitt (1fp) des Trageelementes (1s) angebracht ist.

11. Anordnung nach einem der Ansprüche 1 bis 10;
**dadurch gekennzeichnet, dass:**
die Anordnung des Weiteren wenigstens einen Rückspiegel (1h) umfasst, und **dadurch**, dass der wenigstens eine Rückspiegel (1h) an der Verkleidungsabdeckung (1c) angebracht ist.

12. Anordnung nach einem der Ansprüche 1 bis 11;
**dadurch gekennzeichnet, dass:**
die Anordnung des Weiteren wenigstens einen Scheinwerfer (1f) umfasst, und **dadurch**, dass der wenigstens eine Scheinwerfer (1f) an der Verkleidungsabdeckung (1c) angebracht ist.

13. Trageelement (1s) für ein Motorrad (100), das einen Hauptrahmen umfasst, wobei das Trageelement (1s) so eingerichtet ist, dass es wenigstens eine Frontverkleidungsabdeckung (1c) und einen Tachometer des Motorrades trägt, wobei das Trageelement (1s) so eingerichtet ist, dass es an dem Rahmen des Motorrades (100) so befestigt und von ihm abgenommen wird, dass Befestigen des Trageelementes (1s) an dem Rahmen und Abnehmen des Trageelementes (1s) von ihm bewirkt, dass die wenigstens eine Verkleidungsabdeckung (1 c) und der Tachometer zusammen mit dem Trageelement (1s) als eine Baugruppe an dem Rahmen befestigt bzw. von ihm abgenommen werden;
das Trageelement (1s) einen vorderen Abschnitt (1fp), der von einem Fahrer bzw. Sozius des Motorrades (100) weggewandt ist, sowie einen hinteren Abschnitt (1 sr) umfasst, der dem vorderen Abschnitt (1fp) gegenüberliegt und einem Fahrer oder Sozius des Motorrades (100) zugewandt ist, wenn das Trageelement (1s) an dem Rahmen befestigt worden ist, wobei der hintere Abschnitt (1 sr) des Trageelementes (1 s) so eingerichtet ist, dass er an dem Rahmen des Motorrades (100) befestigt und von ihm entfernt wird;
**dadurch gekennzeichnet, dass**
das Trageelement (1 s) eine obere Wand (1 u) umfasst, die so eingerichtet ist, dass sie den wenigstens einen Tachometer trägt, und die sich zwischen dem vorderen Abschnitt (1fp) und dem hinteren Abschnitt (1sr) zusammen mit zwei einander gegenüberliegenden Seitenwänden (1ll, 1lr) erstreckt, die sich von der oberen Wand (1 u) nach unten erstrecken und einander in der Nähe des hinteren Abschnitts (1sr) nahekommen, **dadurch**, dass in dem hinteren Abschnitt (1sr) ein Schlitz (1sl) vorhanden ist, und **dadurch**, dass der Schlitz (1sl) so eingerichtet ist, dass er wenigstens einen Abschnitt einer Platte (101p) aufnimmt, die sich von dem Lenkrohr (101) des Hauptrahmens des Motorrades aus erstreckt.

14. Trageelement nach Anspruch 13;
**dadurch gekennzeichnet, dass:**
die zwei einander gegenüberliegenden Wände (1ll, 1lr) Durchgangslöcher (1 st) umfassen, die so eingerichtet sind, dass sie eine Befestigungseinrichtung (1a) zum Befestigen des Trageelementes (1s) an der Platte (101p) umfassen, die sich von dem Lenkrohr (101) aus erstreckt.

15. Trageelement nach Anspruch 14;
**dadurch gekennzeichnet, dass:**
die Durchgangslöcher (1st) von dem Typ sind, der zum Aufnehmen von Schraubeinrichtungen (1a) eingerichtet ist.

16. Trageelement nach Anspruch 15;
**dadurch gekennzeichnet, dass:**
die Schraubeinrichtungen (1 a) so eingerichtet sind, dass sie in entsprechenden Löchern (101t) der Platte (101p) aufgenommen werden, die sich von dem Lenkrohr (101) aus erstreckt.

17. Trageelement nach einem der Ansprüche 13 bis 16;
**dadurch gekennzeichnet, dass:**
der Schlitz (1sl) durch die zwei einander gegenüberliegenden Seitenwände (1ll, 1lr) gebildet wird und in einer im Wesentlichen vertikalen Richtung verläuft, so dass er so eingerichtet ist, dass er wenigstens einen Abschnitt der vorstehenden Platte (101 p) aufnimmt, wobei sich die vorstehende Platte (101 p) im Wesentlichen parallel zu dem Längsrohr (101) erstreckt.

18. Trageelement nach einem der Ansprüche 1 bis 16;
**dadurch gekennzeichnet, dass:**
der Schlitz (1sl) in einer im Wesentlichen horizontalen Richtung verläuft, so dass er so eingerichtet ist, dass er wenigstens einen Abschnitt der vorstehenden Platte (101 p) aufnimmt, wobei sich die vorstehende Platte (101 p) im Wesentlichen senkrecht zu dem Lenkrohr (101) erstreckt.

19. Trageelement nach einem der Ansprüche 13 bis 18;
**dadurch gekennzeichnet, dass:**
das Trageelement (1 s) des Weiteren eine Aufnahmevertiefung (1 ca) umfasst, die so eingerichtet ist, dass sie wenigstens teilweise den elektrischen Kabelbaum oder Kabel aufnimmt oder unterbringt, die so eingerichtet sind, dass sie den wenigstens einen Tachometer mit einer Stromquelle des Motorrades (100) verbinden.

20. Trageelement nach Anspruch 19;
**dadurch gekennzeichnet, dass:**
die Vertiefung (1 ca) durch die zwei einander gegenüberliegenden Seitenwände (1ll, 1lr) gebildet wird, die sich von der oberen Wand (1 u) des Trageelementes (1 s) nach unten erstrecken.

21. Trageelement nach Anspruch 20;
**dadurch gekennzeichnet, dass:**
sich die Vertiefung (1ca) unterhalb der oberen Wand (1 u) und zwischen dem vorderen Abschnitt (1fp) und dem hinteren Abschnitt (1sr) des Trageelementes (1s) befindet, das den Schlitz (1sl) umfasst.

22. Trageelement nach einem der Ansprüche 13 bis 21;
**dadurch gekennzeichnet, dass:**
es der vordere Abschnitt (1fp) des Trageelementes (1s) ist, der so eingerichtet ist, dass er die Verkleidungsabdeckung (1c) trägt.

## Revendications

1. Assemblage de carénage frontal (1) pour une motocyclette (100) comprenant un premier châssis, ledit assemblage (1) comprenant un élément de support (1s) supportant au moins un capot de carénage frontal (1c) et apte à supporter au moins un compteur de vitesse, ledit élément de support (1s) étant apte à être fixé audit châssis et détaché dudit châssis de ladite motocyclette (100) de sorte que la fixation dudit élément de support (1s) audit châssis et le détachement dudit élément de support (1s) dudit châssis ont pour conséquence que ledit assemblage (1) est respectivement fixé audit châssis et détaché dudit châssis ;
ledit élément de support (1s) comprenant une partie frontale (1fp) faisant face à l'opposé d'un pilote ou d'un passager de ladite motocyclette (100) et une partie arrière (1sr) opposée à ladite partie frontale (1fp) et faisant face à un pilote ou un passager de ladite motocyclette (100) une fois que ledit élément de support (1s) a été fixé audit châssis, ladite partie arrière (1sr) dudit élément de support (1s) étant apte à être fixée audit châssis et déposée dudit châssis de ladite motocyclette (100) ;
**caractérisé en ce que**
ledit élément de support (1s) comprend une paroi supérieure (1u) apte à supporter ledit au moins un compteur de vitesse et s'étendant entre ladite partie frontale (1fp) et ladite partie arrière (1sr), avec deux parois latérales opposées (1ll, 1lr) s'étendant vers le bas à partir de ladite paroi supérieure (1u) et se rapprochant l'une de l'autre à proximité de ladite partie arrière (1sr), **en ce que** dans ladite partie arrière (1sr) il est prévu une fente (1sl), et **en ce que** ladite fente (1sl) est apte à recevoir au moins une partie d'une plaque (101p) s'étendant de la colonne de direction (101) dudit châssis principal de ladite motocyclette.

2. Assemblage selon la revendication 1,
**caractérisé en ce que :**
lesdites deux parois opposées (1ll, 1lr) comprennent des trous traversants (1st) aptes à recevoir un moyen de fixation (1a) pour fixer ledit élément de support (1s) à ladite plaque (101p) s'étendant de ladite colonne de direction (101).

3. Assemblage selon la revendication 2,
**caractérisé en ce que** :
lesdits trous traversants (1st) sont de type apte à recevoir un moyen de vissage (1a).

4. Assemblage selon la revendication 3,
**caractérisé en ce que** :
ledit moyen de vissage (1a) est apte à être reçu dans des trous correspondants (101t) de ladite plaque (101p) s'étendant de ladite colonne de direction (101).

5. Assemblage selon l'une quelconque des revendications 1 à 4,
**caractérisé en ce que :**
ladite fente (1sl) est définie par lesdites deux parois latérales opposées (1ll, 1lr) et s'étend dans une direction sensiblement verticale de manière à être apte à recevoir au moins une partie de ladite plaque protubérante (101p), avec ladite plaque protubérante (101p) s'étendant sensiblement parallèlement à ladite colonne de direction (101).

6. Assemblage selon l'une quelconque des revendications 1 à 4,
**caractérisé en ce que :**
ladite fente (1sl) s'étend dans une direction sensiblement horizontale de manière à être apte à recevoir au moins une partie de ladite plaque protubérante (101p), avec ladite plaque protubérante (101p) s'étendant sensiblement perpendiculairement à ladite colonne de direction (101).

7. Assemblage selon l'une quelconque des revendications 1 à 6,
**caractérisé en ce que :**
ledit élément de support (1s) comprend en outre un évidement de réception (1ca) apte à au moins partiellement recevoir ou héberger le faisceau électrique ou les câbles électriques aptes à connecter électriquement ledit au moins un compteur de vitesse à une source d'alimentation électrique de ladite motocyclette (100).

8. Assemblage selon la revendication 7,
**caractérisé en ce que :**
ledit évidement (1ca) est défini par lesdites deux parois latérales opposées (1ll, 1lr) s'étendant vers le bas à partir de ladite paroi supérieure (1u) dudit élément de support (1s).

9. Assemblage selon la revendication 8,
**caractérisé en ce que** :
ledit évidement (1ca) est situé au-dessous de ladite paroi supérieure (1u) et entre ladite partie frontale (1fp) et ladite partie arrière (1sr) dudit élément de support (1s) comprenant ladite fente (1sl).

10. Assemblage selon l'une quelconque des revendications 1 à 9,
**caractérisé en ce que :**
ledit capot de carénage (1c) est monté sur ladite partie frontale (1fp) dudit élément de support (1s).

11. Assemblage selon l'une quelconque des revendications 1 à 10,
**caractérisé en ce que :**
ledit assemblage comprend en outre au moins un rétroviseur (1h), et **en ce que** ledit au moins un rétroviseur (1h) est monté sur ledit capot de carénage (1c).

12. Assemblage selon l'une quelconque des revendications 1 à 11,
**caractérisé en ce que :**
ledit assemblage comprend en outre au moins un phare (1f), et **en ce que** ledit au moins un phare (1f) est monté sur ledit capot de carénage (1c).

13. Elément de support (1s) pour une motocyclette (100) comprenant un châssis principal, ledit élément de support (1s) étant apte à supporter au moins un capot de carénage frontal (1c) et un compteur de vitesse de ladite motocyclette, ledit élément de support (1s) étant apte à être fixé audit châssis et détaché dudit châssis de ladite motocyclette (100) de sorte que la fixation dudit élément de support (1s) audit châssis et le détachement dudit élément de support (1s) dudit châssis ont pour conséquence que ledit au moins un capot de carénage (1c) et le compteur de vitesse sont respectivement fixés audit châssis et détachés dudit châssis, ensemble avec ledit élément de support (1s) sous la forme d'un assemblage ;
ledit élément de support (1s) comprenant une partie frontale (1fp) faisant face à l'opposé d'un pilote ou d'un passager de ladite motocyclette (100) et une partie arrière (1sr) opposée à ladite partie frontale (1fp) et faisant face à un pilote ou un passager de ladite motocyclette (100) une fois que ledit élément de support (1s) a été fixé audit châssis, ladite partie arrière (1sr) dudit élément de support (1s) étant apte à être fixée audit châssis et déposée dudit châssis de ladite motocyclette ;
**caractérisé en ce que**
ledit élément de support comprend une paroi supérieure (1u) apte à supporter ledit au moins un compteur de vitesse et s'étendant entre ladite partie frontale (1fp) et ladite partie arrière (1sr), avec deux parois latérales opposées (1ll, 1lr) s'étendant vers le bas à partir de ladite paroi supérieure (1u) et se rapprochant l'une de l'autre à proximité de ladite partie arrière (1sr), **en ce que** dans ladite partie arrière (1sr) il est prévu une fente (1sl), et **en ce que**
ladite fente (1sl) est apte à recevoir au moins une partie d'une plaque (101p) s'étendant de la colonne de direction (101) dudit châssis principal de ladite motocyclette.

14. Elément de support selon la revendication 13,
**caractérisé en ce que :**
lesdites deux parois opposées (1ll, 1lr) comprennent des trous traversants (1st) aptes à recevoir un moyen de fixation (1a) pour fixer ledit élément de support (1s) à ladite plaque (101p) s'étendant de ladite colonne de direction (101).

15. Elément de support selon la revendication 14,
**caractérisé en ce que** :
lesdits trous traversants (1st) sont de type apte à recevoir un moyen de vissage (1a).

16. Elément de support selon la revendication 15,
**caractérisé en ce que :**
ledit moyen de vissage (1a) est apte à être reçu dans des trous correspondants (101t) de ladite plaque (101p) s'étendant de ladite colonne de direction (101).

17. Elément de support selon l'une quelconque des revendications 13 à 16,
**caractérisé en ce que :**
ladite fente (1sl) est définie par lesdites deux parois latérales opposées (1ll, 1lr) et s'étend dans une direction sensiblement verticale de manière à être apte à recevoir au moins une partie de ladite plaque protubérante (101p), avec ladite plaque protubérante (101p) s'étendant sensiblement parallèlement à ladite colonne de direction (101).

18. Elément de support selon l'une quelconque des revendications 1 à 16,
**caractérisé en ce que :**
ladite fente (1sl) s'étend dans une direction sensiblement horizontale de manière à être apte à recevoir au moins une partie de ladite plaque protubérante (101p), avec ladite plaque protubérante (101p) s'étendant sensiblement perpendiculairement à ladite colonne de direction (101).

19. Elément de support selon l'une quelconque des revendications 13 à 18,
**caractérisé en ce que :**
ledit élément de support (1s) comprend en outre un évidement de réception (1ca) apte à au moins partiellement recevoir ou héberger le faisceau électrique ou le câble électrique apte à connecter électriquement ledit au moins un compteur de vitesse à une source d'alimentation électrique de ladite motocyclette (100).

20. Elément de support selon la revendication 19,
**caractérisé en ce que :**
ledit évidement (1ca) est défini par lesdites deux parois latérales opposées (1ll, 1lr) s'étendant vers le bas à partir de ladite paroi supérieure (1u) dudit élément de support (1s).

21. Elément de support selon la revendication 20,
**caractérisé en ce que** :
ledit évidement (1ca) est situé au-dessous de ladite paroi supérieure (1u) et entre ladite partie frontale (1fp) et ladite partie arrière (1sr) dudit élément de support (1s) comprenant ladite fente (1sl).

22. Elément de support selon l'une quelconque des revendications 13 à 21,
**caractérisé en ce que :**
c'est ladite partie frontale (1fp) dudit élément de support (1s) qui est apte à supporter ledit capot de carénage (1c).
